# EUROPEAN PATENT APPLICATION

(11) **EP 4 002 797 A1**
(43) Date of publication of application: **25.05.2022**
(21) Application number: 20207796.2
(22) Date of filing: 16.11.2020
(51) Int. Cl.: H04L 29/08

(54) **METHOD AND DISCOVERY ENGINE FOR DISCOVERING INDUSTRIAL DATA IN HETEROGENOUS INDUSTRIAL DATA SOURCES**

(71) Applicant: Siemens Aktiengesellschaft, 80333 München (DE)
(72) Inventor: Blank, Michele, 80999 München (DE); Bröring, Arne, 81735 München (DE)

(57) **Abstract**

The proposed embodiments relate to a method for discovering industrial data in heterogenous industrial data sources including receiving a technology agnostic discovery request from a client, said discovery restricted to an extent specified by at least one filter criterion included within the technology agnostic discovery request; identifying at least one binding module by mapping the filter criterion with a binding description specified by said at least one binding module, the at least one identified binding module matching at least one filter criterion; assigning at least one instance of the technology agnostic discovery request to said at least one identified binding module; deriving at least one technology specific discovery request from the at least one instance of the technology agnostic discovery request; executing at least one technology specific discovery in one of said heterogenous data sources supporting a discovery technology related to the technology specific discovery request; and; acquiring at least one result of the at least one technology specific discovery and forwarding the at least one result to the client.

## Description

### TECHNICAL FIELD

The present embodiments relate to a method for discovering industrial data amongst a plurality of industrial entities. More specifically, the present embodiments relate to a method for discovering industrial data using a technology agnostic discovery request.

### BACKGROUND

While industrial automation system components of the past have traditionally been interconnected by specialized industrial networks and protocols for access and data exchange, the development of present and future automation systems has put considerable focus on exchanging semantically enriched information aiming for a realization of flexible manufacturing scenarios.

The evolvement of networking between computers and computing devices has eventually led to a so-called Internet of Things. In an industrial context, Internet of Things means a concept which functionally connects Things - or industrial entities - for achieving interactions among a multiplicity of things or, in other words, a composite interaction for the purpose of tracking, monitoring or managing an industrial entity. Obviously, industrial entities may vary in terms of complexity, ranging from single sensors, devices, equipment, systems, sub-systems complete processes in an industrial environment, or eventually the hole factory.

Said composite interactions allow industrial entities or things to exchange and process metadata, to derive actionable intelligence, and to autonomously react to their environment. However, the heterogeneity of things, their capabilities, supported actions, properties, different communication technologies and protocols add to the complexity of effective realization of the platforms. Accordingly, mechanisms for an automatic discovery of resources, along with means for accessing properties and capabilities of these resources are paramount.

Existing discovery methodologies, however, have to cope with a broad range of heterogenous industrial data sources. Yet worse, implementing application in such heterogeneous environments is intricate as various discovery technologies - including various methodologies and discovery protocols - need to be interfaced.

Accordingly, there is a need in the art to facilitate a more universal method for discovering industrial data in heterogenous industrial data sources which is capable of concealing a complexity in applying heterogenous discovery technologies.

### SUMMARY

One preliminary consideration according to the present embodiments in addressing existing problems with discovering industrial data is that an application of several scattered discovery technologies, as presently practiced, is to be replaced in favor of one discovery request in a more universal representation.

Embodiments herein generally involve a computer-implemented method for discovering industrial data in heterogenous industrial data sources, using a universal or technology-agnostic discovery request.

In one embodiment, a computer-implemented method for discovering industrial data in heterogenous industrial data sources, the method including the steps of:
- receiving a technology agnostic discovery request from a client, said discovery restricted to an extent specified by at least one filter criterion included within the technology agnostic discovery request;
- identifying at least one binding module by mapping the filter criterion with a binding description specified by said at least one binding module, the at least one identified binding module matching at least one filter criterion;
- assigning at least one instance of the technology agnostic discovery request to said at least one identified binding module;
- deriving at least one technology specific discovery request from the at least one instance of the technology agnostic discovery request;
- executing at least one technology specific discovery in one of said heterogenous data sources supporting a discovery technology related to the technology specific discovery request; and;
- acquiring at least one result of the at least one technology specific discovery and forwarding the at least one result to the client.

According to an embodiment, a discovery engine comprising a processor and a data storage device having stored thereon a computer executable program code is provided. The data storage device may be implemented within or external to the processor.

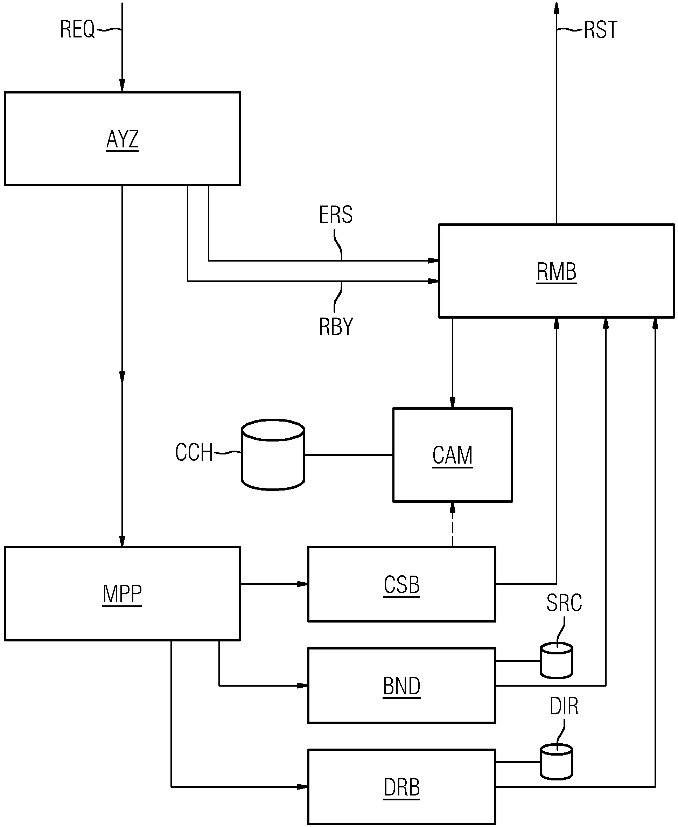

### DESCRIPTION OF THE DRAWING

The objects as well as further advantages of the present invention will become more apparent and readily appreciated from the following description of the preferred embodiments, taken in conjunction with the accompanying drawing accompanying drawing of which the sole FIG shows a simplified block diagram of a discovery engine according to an embodiment, the discovery engine being connectable with one or more clients and one or more industrial entities.

### DETAILED DESCRIPTION

Existing discovery methodologies and/or discovery technologies - hereinafter commonly referred to as discovery technologies - include a large variety of discovery protocols which can be broken down in one of the following categories:
A first category of discovery technologies pertains to searching on a network. This discovery technology uses protocols that allow a discovery of endpoints or things connected by the network.
The following protocols are suitable for this discovery technology:
- A protocol entitled mDNS or Multicast DNS (Domain Name System) is, similar to its eponymous related protocol DNS, used to resolve host names to IP (Internet Protocol) addresses. The protocol mDNS differs from DNS in that it is a stand-alone protocol without requiring a DNS server.
- A protocol entitled Multicast CoAP (Constrained Application Protocol) supports requests to an IP multicast group. Clients may use an »all-CoAP-nodes« multicast address to discover things. CoAP servers listen to requests using this multicast address and advertise themselves by replying to the client request.
- A protocol entitled SSDP (Simple Service Discovery Protocol) is used for discovering services. One or more servers using this protocol can receive an SSDP multicast discovery request sent by an SSDP client. A server responds to the client by a unicast response for the case that one of its hosted services is matching the discovery request.

A second category of discovery technologies pertains to searching within a directory. In contrast to the above described discovery technology, a central directory can be used for discovery of things and their resources. Further on, queries may be submitted to the directory in order to search for things and/or resources. The following protocols are suitable for this discovery technology:
- A protocol entitled CoRE Resource Directory as developed by the Internet Engineering Task Force (IETF) implements a Resource Directory in a Constrained RESTful Environments (CoRE).
- A protocol entitled XMPP (Extensible Messaging and Presence Protocol). XMPP is a set of open XML technologies for presence and real-time communication developed by an open source community.
- A protocol entitled HyperCat. HyperCat defines a lightweight catalogue that exposes resources encoded in JSON via HTTP on the Web. It lists a number of resource items identified via URI and each described with a number of triple statements, according to the model of the Resource Description Framework (RDF).
- A query language entitled SPARQL, which is a recursive acronym for SPARQL Protocol and RDF Query Language. Although SPARQL is a powerful query language which can be used to query and manipulate RDF graph content stored in an RDF triple store, a SPARQL endpoint in its basic form complies with a directory. Accordingly, SPARQL may be used as a protocol for discovering directories.

A third category of discovery technologies pertains to searching an environment. This category includes technologies that enable the discovery of things, which are in close spatial proximity of the client. A commonality of all technologies in this category is that a vicinity of the client to the things is required in order to discover the thing. The following protocols are suitable for this discovery technology:
- A technology entitled NFC (Near Field Communication) is commonly based on an RFID (Radio-Frequency Identification) technology allowing a bidirectional communication between endpoints. An inductive coupling is created between two NFC antennae of the client and the discovered thing.
- A technology entitled BLE (Bluetooth Low Energy) provides a wireless personal area network. BLE is often used in a unidirectional transaction pattern. This means that devices - which are often referred to as beacons - periodically broadcast advertising packets while a client is listening for such packets.

Developing a discovery in heterogeneous environments with a variety of discovery technologies requires as interfacing these various discovery technologies. An application developer entrusted with this interoperability issue has to handle the heterogeneity and complexity at the time of developing the application of even at the time of integrating the discovery function into the application. Still further, a blocking issue may arise for the application developer as applicable discovery technologies are unknown at the development time of the application and may remain unknown even at run time of the application.

A following example illustrates further impediments of the presently practiced usage of known discovery methods imposed on a client within heterogeneous industrial environments. An exemplary client - here an autonomous industrial vehicle in an industrial manufacturing environment - may have multiple discovery aims:
- The autonomous industrial vehicle needs to autonomously identify a drilling machine with certain properties - e.g. availability - whereby certain capabilities of this drilling machine have to meet requirements - e.g. drill size - of a workpiece which is currently transported by the autonomous industrial vehicle. A specific request concerning the capabilities of the drilling machine may be implemented using a discovery within a directory according to the second category of discovery technologies as subsumed above. The directory may be a database interfaced as a SPARQL endpoint.
- While moving through the industrial site, the autonomous industrial vehicle may discover other devices in its vicinity in order to avoid collisions. Accordingly, this discovery technology differs from the directory discovery technology mentioned above and belongs to the third category of discovery technologies as subsumed above.
- Towards the end of its battery capacity the autonomous industrial vehicle may submit a discovery request in a Multicast CoAP format over a wireless network. Retrieving results in a CoRE Link format from other nodes connected to the wireless network allow the autonomous industrial vehicle to locate charging points in its vicinity. This kind of discovery technology again differs from the discovery technologies mentioned above.

The above example shows that a multiplicity of discovery methods has to be implemented on a client within heterogeneous industrial environments. It is an object of the proposed embodiments to facilitate a technology agnostic discovery method which autonomously derives a suitable discovery technology thereby concealing the technology-specific query language in the universal, i.e. technology agnostic discovery method. The proposed embodiments harmonize the multiplicity of discovery technologies by solely one discovery request which is expressed in a universal or technology-agnostic representation.

Turning now to FIG. which shows a simplified block diagram of a discovery engine according to an embodiment, the discovery engine being connected with one or more - not shown - clients and one or more - not shown - industrial entities.

A request analyzer AYZ receives a discovery request REQ from the client. The discovery request REQ is expressed by a technology agnostic language which is not limited or applicable to a particular discovery protocol.

A listing shown below shows an exemplary code or pseudo code example of a technology agnostic discovery request:

```
 discovert ({ filter })
 .then( function(things) {
 things.forEach( function(thing) {
 console.log("found" + thing.name);
 });
 })
```

The discovery request REQ includes at least one filter criterion which restricts the discovery to a certain specified extent. The general expression {filter} in the listing shown above is supplemented by further expressions for defining filter criteria. A listing shown below shows an exemplary code or pseudo code example of a filter as part of a discovery request REQ, or in other words, a general structure of a discovery filter according to an embodiment.

```
 filter: {
     searchSource : {
          url = [http or coap link to a repository or multicast address],
          ip = < IP address to a repository of multicast address >
          type = [directory | environment | network],
          technology = [sparql | mDNS | multicast CoAP | ... ]
          }
    metadataKeyValue : < general metadata filter, defined as key value with regex>
    spatialFilter : < search with boundingbox, location, or geofence over spatial
    information of the thing >
     temporalFilter : < search with 'within', 'after', 'before' etc. over temporal
     information of the thing, e.g., "lastUpdated", "deployedAt", ... >
     thingIsSecured : <defines whether a thing (or its services) are secured with
     authentication/authorization mechanisms>
     cacheResultMaxAge : <maximum age of results presented to user>
    not ( ... ) // can invert any of the filter criteria above
    },
    rankBy // < defines the sorting aspect >,
    earlyResults
```

The discovery filter included in the discovery request REQ includes at least one filter criterion. Some exemplary filter criteria are described in the following:
- An optional filter criterion pertaining to a search source: An optional searchSource parameter may be specified as shown in the listing above. The searchSource parameter may contain a URL or IP address defining an endpoint of a directory or network for querying. The same or a further parameter may also define the at least one type of discovery category to search. The same or a further parameter may also define the particular discovery technology, e.g. a particular discovery technology for which a search binding is defined. Search bindings will be explained further down below.
- An optional filter criterion pertaining to a search in metadata: An optional metadataKeyValue parameter as shown in the listing above allows for a flexible definition of various metadata to be included in the discovery. Thereby, the key value in this parameter may have to conform to a metadata property as listed in the metadata of a thing. The value may be specified using regular expressions. A regular expression
   metadataKeyValue: {id: x*}
   for example, defines a query for things which include a metadata property set containing a string »id« wherein one of said metadata property sets is assigned to a value conforming to the regular expression x*.
- An optional filter criterion pertaining to a spatial extent: An optional spatialFilter as shown in the listing above may be specified for restricting the search to a given spatial extent which may be defined as a bounding box, a location, or by a geofence, i.e. a virtual perimeter for a real-world geographic area. The spatialFilter may be applied to a spatial information of the thing.
- An optional filter criterion pertaining to a temporal extent: An optional temporalFilter as shown in the listing above may be specified for restricting the search to the given temporal extent which may be defined using temporal operators »within«, »after«, »before«, etc. The temporalFilter may be applied to a temporal information of the thing as specified in the temporalFilter, e.g., »lastUpdated«, »deployedAt«, etc.
- An optional filter criterion pertaining to a security limitation: An optional Boolean parameter thingIsSecured as shown in the listing above may be specified. If this parameter is TRUE the search results may be restricted to those things which are secured with authentication and/or authorization mechanisms. Otherwise, if this parameter is FALSE, both, secured and unsecured things may be returned.
- An optional filter criterion pertaining to an age limitation: An optional cacheResultMaxAge parameter as shown in the listing above may be specified which may limit results from a cache to a maximum age as specified by said parameter.

An optional »not« parameter extension as shown in the listing above may be specified for negating or inverting a filter criterion to which the parameter »not« is assigned. Filter criteria may be connected with a logical AND.

Having received the discovery request REQ, the request analyzer AYZ analyzes the discovery request REQ. As one result of this analysis, the discovery filter included in the discovery request REQ is handed over from the request analyzer AYZ to a request mapping module MPP. The request mapping module MPP has the task of assigning at least one instance of the discovery request REQ - e.g. parts of the discovery filter, or one or more of the filter criteria included in the discovery filter - to at least one suitable binding module CSB,BND,DRB.

For the purpose of identifying one or more suitable binding modules DRB,BND,CSB for assignment, a filter criterion included in the discovery request REQ - or, more generally, one or more instances of the discovery request REQ - is mapped with a binding description of at least one binding module CSB,BND,DRB. A suitable binding module DRB,BND,CSB is one whose binding description matches at least one filter criterion included in the discovery filter or matching at least one other instances of the discovery request REQ.

After suitable binding modules DRB,BND,CSB have been identified, the request mapping module MPP assigns respective instances of the discovery request REQ to the respective at least one suitable binding module CSB,BND,DRB, or, in other words, to the respective at least one identified binding module CSB,BND,DRB.

The discovery engine according to the exemplary embodiment includes three binding module DRB,BND,CSB wherein each binding module DRB,BND,CSB is implementing a search binding for a particular discovery technology:
- A first binding module DRB may implement a search binding for searching directories, e.g. for searching in SPARQL endpoints. The first binding module DRB may maintain a list or a database DIR of already registered endpoints which may be included for discovery.
- A second binding module BND may implement a search binding for searching on networks using, for example, the discovery protocol Multicast CoAP. The second binding module BND may maintain a list or a database SRC of target addresses - multicast or broadcast - of registered networks.
- A third binding module CSB may implement a specific search binding for searching directories, wherein a cache manager CAM is accessed for querying previous results which are stored in a cache CCH. The cache CCH is maintained by the cache manager CAM.

A search binding may generally translate from the technology agnostic discovery request REQ to a technology specific request. An example of a filter for a technology-agnostic discovery request on a SPARQL endpoint is shown below:

```
 filter: {
     searchsource: { url: http://hisDirectory.com },
    metadataKeyValue: [
          { "http://xmlns.com/device/serial": "123" },
          { "http://xmlns.com/device/type": "PLC" },
          ],
          spatialFilter: [
     geofence: { 51.46 2.6 10 'km' }
     ]
     }
```

A listing below shows the »translated« filter for the technology-specific discovery request - whereby the exemplary specific discovery technology is SPARQL - as a result of a translation from the technology-agnostic discovery request shown above.

```
 PREFIX spatial: <http://jena.apache.org/spatial#>
 PREFIX rdfs: <http://www.w3.org/2000/01/rdf-schema#>
 SELECT ?x
 WHERE
 { ?x http://xmlns.com/device/serial "123" ;
     ?x http://xmlns.com/device/type "PLC" ;
     ?x spatial:location ?place;
     ?place spatial:nearby (51.46 2.6 10 'km') .
 }
```

The binding modules DRB,BND,CSB shown in the FIG may be appended or amended with alternative and/or additional binding modules. Additional or amended binding modules may be capable of implementing one or more of the three discovery categories described above. For example, the second binding module BND as described above may be amended by an additional or alternative search binding for a discovery technology which pertains to searching an environment for enabling a discovery of things, which are in close spatial proximity of the client. The amended or replaced second binding module BND may maintain a cache or a database SRC of known devices in order enable a faster completion of future discoveries.

A binding module DRB,BND,CSB or a particular search binding within the binding module DRB,BND,CSB may implement at least one binding description, preferably one binding description for each search binding. The binding description may be a document or a programmatic interface definition for exposing its capabilities to the request mapping module MPP.

An example of a binding description for the protocol Multicast CoAP is shown below:

```
 binding: {
     supportedFilterCriteria: [
          { searchsource : [ip, {type: "network"), {technology: "multicastCoAP"}] },
         metadataKeyValue
     ]
     }
```

An example of a binding description for the query language SPARQL is shown below:

```
 binding: {
     supportedFilterCriteria: [
          { searchsource : [url, ip, {type: "directory"), {technology : "SPARQL"}]
          },
         metadataKeyValue,
          spatialFilter: [boundingBox, geofence]
     ]
     }
```

After deriving at least one technology specific discovery request from the at least one instance of the technology agnostic discovery request, a technology specific discovery is executed by the search bindings of the binding modules DRB,BND,CSB in a respective - not shown - data source wherein said data sources may be heterogeneous from each other, or, alternatively, at least partially identical. After receiving individual results delivered from involved search bindings, the binding module DRB,BND,CSB or search bindings within the binding modules DRB,BND,CSB deliver these individual results to a result assembling module RMB.

According to an embodiment, the result assembling module RMB receives these individual results from the binding modules DRB,BND,CSB and gathers these individual results to form a result set RST which is delivered to the client. Alternatively, individual results delivered from involved search bindings are ranked by the result assembling module RMB prior to gathering the individual results and/or prior to forming the result set RST which is delivered to the client.

According to an alternative embodiment, the result assembling module RMB receives these individual results from the binding modules DRB,BND,CSB and forwards these individual results directly to the client.

All individual results or the result set RST may be forwarded from the result assembling module RMB to the cache manager CAM for storing the individual results or the result set RST in the cache CCH.
The alternative handling in directly forwarding or gathering individual results by the result assembling module RMB may be commissioned by the discovery request REQ, or, in other words, by the client composing the discovery request REQ. Referring back to the listing of the discovery filter as shown above, two optional parameters of which will now be further detailed:

```
 rankBy // < defines the sorting aspect >,
 earlyResults
```

If the filter definition of the discovery request REQ or the discovery request REQ include a parameter »earlyResults« and/or a parameter »rankBy«, these parameters are directly or indirectly passed from the request analyzer AYZ receiving the discovery request to the Result Assembler RMB, see arrow ERS depicting the forwarding of the parameter earlyResults and arrow RBY depicting the forwarding of the parameter rankBy. The filter definition of the discovery request REQ - or the discovery request REQ itself - may include either none, one or both of said parameters.

In case the earlyResults parameter is set, the result assembling module RMB may forward individual results at least substantially immediately from the binding modules DRB,BND,CSB to the client.

In case the rankBy parameter is defined and e.g. set to a specific sorting pattern, the individual results received from the search bindings are ordered by the result assembling module RMB in accordance with the sorting pattern before the individual results or the result set RST are forwarded to the client.

The individual results or the result set RST list communication technology and endpoint for each found thing. A following listing shows an example result set RST answering the discovery request REQ according to the listing shown above.

```
 resultSet : [
     { communicationTechnology: "hard:BluetoothHardware",
          endpoint: "12:34:56:78:9A:BC",
          rssi: "-30 dbm",
          hard:supportedBluetoothProfiles: "GAP, SPP, ..."
     },
     {
          communicationTechnology: "HTTP",
          endpoint: "http://my-thing.com:1234"
     },
     {
          communicationTechnology: "MQTT",
          endpoint: "mqtt://my-mqtt-broker.com:1883/topics/123"
     },
     ]
```

Objects of the result set RST preferably include a statement of the specific communication technology or »communicationTechnology«. Communication technology is thereby not the discovery technology of the search binding, but the technology used to communicate with the thing.

Further on, endpoints may be characterized by key-value-pair using an identifier inferred from an ontology such as a delivery context ontology for defining terms with properties, classes and instances that model the hardware elements of a delivery context:
hard:supportedBluetoothProfiles: "GAP, SPP, ..."

Alternatively, endpoints may be characterized by key-value-pair with binding-specific extensions that the client may use such as in the line:
rssi: "-30 dbm",

Instead of returning communication technology and endpoint for a discovered thing, a metadata document or a semantic description may be returned in the alternative, including:
- a »Web of Things Thing Description« or TD according to specifications of the World Wide Web Consortium or W3C;
- an OPC UA node set according to specifications of the Open Platform Communications Unified Architecture; or;
- a cloud data model such as the MindSphere Asset model.

In the following, an embodiment in the processing of the discovery filter is described referring back to the exemplary listing of the discovery filter shown above. As all filter criteria of the discovery filter are optional, the filter criterion searchSource pertaining to a search source is of course optional as well, which means that the filter criterion searchSource can be omitted. It the filter criterion searchSource is omitted the discovery request REQ submitted by the client is targeted at all registered search sources. An example of such a discovery request omitting a definition of a search source is shown below:

```
 filter: {
 geofence = [10m buffer around my location]
 }
```

In order to meet this discovery request shown above, not only the environment needs to be searched but also directories and networks that allow for a parameter »geofence« in the filter criterion.

For processing a discovery request REC of said kind, the request mapping module MPP has to select search bindings that allow said specification of the parameter »geofence«. To this end, the request mapping module MPP inspects some or more binding modules DRB,BND,CSB or some ore more particular search bindings within the binding modules DRB,BND,CSB in order to query a binding description exposing the capability of being capable of processing the parameter »geofence«.

In the following an embodiment in the processing of the discovery requests REQ is described, wherein a problem in processing the discovery request REQ may arise due to a huge search space.

In cases where a SPARQL endpoint search binding has many registered search sources, an additional omission of a specific search source and/or search type in the discovery request REQ results in a huge search space. A huge search space may particularly mean a large number of directories, networks and/or a large number of environments which need to be queried for discovery.

This problem is alleviated by using a cache. Using a cache reduces an amount of concurrently executed searches. Further on, preliminary search results derived from the cache are immediately available while the actual search is further executed, updating the cached preliminary search results in the background.

Furthermore, using a cache is beneficial for ranking the results, e.g. by relevance, and delivering the results in a ranked manner to the client. The client may select or adjust a ranking parameter in order to receive results in a desired order.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A computer-implemented method for discovering industrial data in heterogenous industrial data sources, the method including the steps of:
- receiving a technology agnostic discovery request from a client, said discovery restricted to an extent specified by at least one filter criterion included within the technology agnostic discovery request;
- identifying at least one binding module by mapping the filter criterion with a binding description specified by said at least one binding module, the at least one identified binding module matching at least one filter criterion;
- assigning at least one instance of the technology agnostic discovery request to said at least one identified binding module;
- deriving at least one technology specific discovery request from the at least one instance of the technology agnostic discovery request;
- executing at least one technology specific discovery in one of said heterogenous data sources supporting a discovery technology related to the technology specific discovery request; and;
- acquiring at least one result of the at least one technology specific discovery and forwarding the at least one result to the client.

2. The method according to claim 1, wherein said technology specific discovery request uses protocols for
- searching endpoints or things connected by the network;
- searching within a directory;
- searching an environment in spatial proximity to the client;

3. The method according to one of the aforementioned claims, wherein two or more of said results are gathered to build a result set which is delivered to the client.

4. The method according to claim 3, wherein said two or more results are ranked within the result set.

5. The method according to claim 4, wherein said two or more results are ranked by a sorting pattern.

6. The method according to one of the aforementioned claims, wherein the results and/or the result set are forwarded to the client as a metadata document or a semantic description.

7. The method according to one of the aforementioned claims, wherein for executing the technology specific discovery a cache manager is accessed for querying previous results.

8. A discovery engine comprising:
- a processor; and;
- a data storage device having stored thereon computer executable program code, which, when executed by the processor, causes the processor to:
- receive a technology agnostic discovery request from a client, said discovery restricted to an extent specified by at least one filter criterion included within the technology agnostic discovery request;
- identify at least one binding module by mapping the filter criterion with a binding description specified by said at least one binding module, the at least one identified binding module matching at least one filter criterion;
- assign at least one instance of the technology agnostic discovery request to said at least one identified binding module;
- derive at least one technology specific discovery request from the at least one instance of the technology agnostic discovery request;
- execute at least one technology specific discovery in one of said heterogenous data sources supporting a discovery technology related to the technology specific discovery request; and;
- acquire at least one result of the at least one technology specific discovery and forward the at least one result to the client.
